# EUROPEAN PATENT SPECIFICATION

(11) **EP 0 329 345 B1**
(45) Date of publication and mention of the grant of the patent: **04.05.1994**
(21) Application number: 89301293.0
(22) Date of filing: 10.02.1989
(51) Int. Cl.: G11B 15/665, G11B 15/61

(54) **Magnetic recording and reproducing apparatus**
Magnetisches Aufnahme- und Wiedergabegerät
Appareil d'enregistrement et de reproduction magnétique

(30) Priority: 12.02.1988 JP 18043/88
(43) Date of publication of application: 23.08.1989
(73) Proprietor: SHARP KABUSHIKI KAISHA, Osaka 545 (JP)
(72) Inventor: Shiraishi, Kenichi, Chiba-ken (JP); Uejima, Takamasa, Abiko-shi Chiba-ken (JP); Katayama, Hironobu, Noda-shi Chiba-ken (JP)
(74) Representative: Brown, Kenneth Richard

(56) References cited:
- EP-A- 0 045 324
- EP-A- 0 115 075
- EP-A- 0 194 420
- DE-A- 3 700 757
- GB-A- 2 096 817

## Description

The present invention generally relates to a magnetic recording and reproducing apparatus such as a video tape recorder or the like, and more particularly, to a magnetic recording and reproducing apparatus of the helical scan system type capable of improved operation through reduction of the tape travelling load.

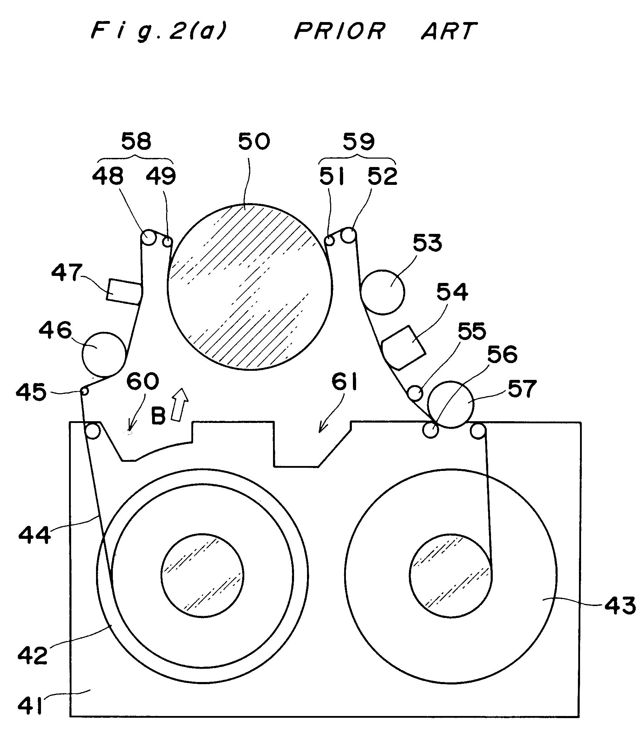

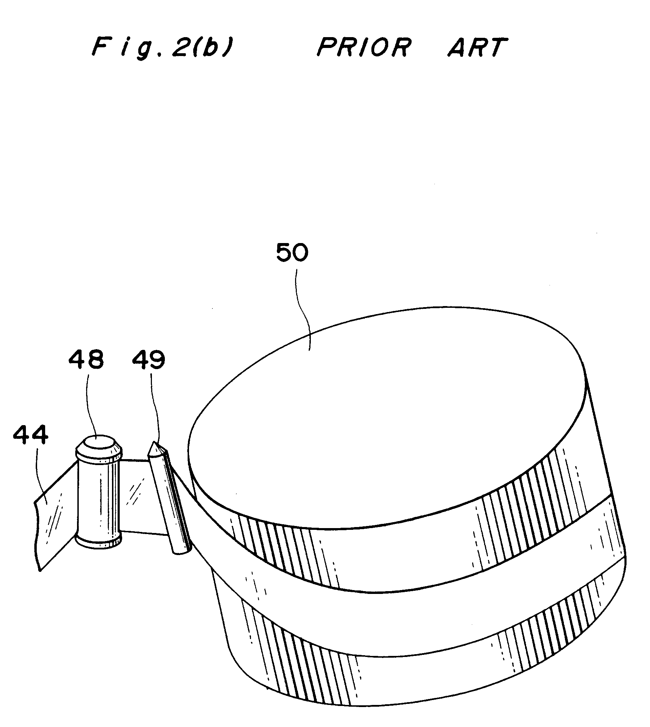

In Figs. 2(a) and 2(b) showing a first example of a conventional magnetic recording and reproducing apparatus, a magnetic tape 44 accommodated in a tape cassette 41 and passed around a supply reel 42 and take-up reel 43, said reels being disposed to lie on the same plane within the tape cassette 41, is drawn out by a set of loading means 58 and 59 from the tape draw-out portions 60 and 61 of said tape cassette 41. The tape draw-out portions 60 and 61 are in the vicinity of those parts of the tape first contacted by said loading means 58 and 59 as the tape is drawn out from the cassette (41). The loading means 58 and 59 are adapted so as to cause the tape to contact part of the outer peripheral surface of a rotary head cylinder 50 generally in an M-shape as shown. The loading means 58 and 59 respectively include a first guide roller 48 and a first inclining post 49, and a second inclining post 51 and a second guide roller 52. The first and second inclining posts 49 and 51 are respectively disposed unrotatably in the vicinity of the rotary head cylinder 50 in the inclined state, while each of said first and second guide rollers 48 and 52 is adapted to be rotatable.

The magnetic tape 44 wound around the outer peripheral surface of the rotary head cylinder 50 is held between a capstan 56 and a pinch roller 57 so as to be driven for running.

The method of travelling or running the magnetic tape 44 in the above known arrangement will now be described.

The magnetic tape 44 paid out from the supply reel 42 in a direction parallel to the plane in which said reels 42 and 43 lie is twisted by the first inclining post 49 so as to be inclined relative to the plane of the reels in its tape travelling path. The tape having been first guided by a tension post 45, a rotary roller 46, an erasing head 47, the first guide roller 48 and first inclining means 49 is then helically wound around the outer peripheral surface of the rotary head cylinder 50.

The magnetic tape 44 leaving said rotary head 50 is guided by the second guide roller 52, a rotary roller 53, an audio head 54 and a fixed guide 55, after having been twisted by the second inclining post 51 so as to be corrected to have no inclination in its tape travelling path relative to the tape reel plane. Thereafter, the magnetic tape 44 is fed into the tape cassette 41 through a capstan 56 and a pinch roller 57, and wound onto the take-up reel 43.

It is to be noted here that the travelling system of the magnetic tape according to the arrangement as described so far is generally called an M loading type travelling system.

Generally, in the case where a post is vertically mounted on a mounting surface (referred to as a vertical post hereinafter), adjustments, etc. may be made more easily than in the case where such a post is mounted on an inclined surface (referred to as an inclining post hereinafter). Moreover, using a vertical post, it is possible to provide flanges for controlling or restricting the movement of the tape running round a rotating post, whereas when using a inclining post, such flanges as described above cannot be used if the inclining post is to rotate, and thus, the inclining post is disadvantageous as compared with the vertical post also from the viewpoint of tape running control.

Nevertheless, in the conventional magnetic recording and reproducing apparatus as described so far, since it is so arranged that the first and second inclining posts 49 and 51 are respectively disposed in the vicinity of inlet and output portions of the rotary head 50 requiring the highest accuracy in the tape running system, extremely high processing accuracy is required for the processing of these parts, while considerable time and labour are necessary for the assembling and adjustments of the apparatus.

A second example of a conventional magnetic recording and reproducing apparatus is disclosed in EP-A-0,194,420, wherein a first inclination is imparted to the tape at a position removed from the rotary head. This known apparatus is acknowledged in the preamble of claim 1. Additionally, in this example, the tape guide pins in the vicinity of the inlet and outlet portions of the rotary heads have flanges mounted thereon and are mounted on an inclined surface. Due to the fact that a large tape winding angle is necessary with respect to said first and second inclining posts 49 and 51 of the first example and the tape guide pins of the second example, the load on the tape due to its travel around the inclining means, guiding means and the rotary head cylinder (hereinafter known as the tape travelling load) of both examples is undesirably increased. Consequently it has been difficult to rapidly feed the magnetic tape onto the outer peripheral surface of the rotary head 50 without damaging the tape or consuming a large amount of power.

Accordingly, the present invention aims to provide a magnetic recording and reproducing apparatus in which the travelling load for the magnetic tape is reduced in order to give a higher performance, and which is simple in construction and stable in functioning with high reliability.

According to the present invention, there is provided a magnetic recording and reproducing apparatus of the helical scan system type which comprises a set of first and second loading means for drawing out a magnetic tape accommodated in a tape cassette and wound around a set of reels lying in the same plane, from first and second tape draw-out portions of said tape cassette so as to be wound around part of the outer peripheral surface of a rotary head cylinder in an approximately M-shape, and inclining means for causing the path of the magnetic tape drawn out from said first tape draw-out portion to become inclined with respect to said plane of said reels, the first loading means corresponding to said first tape draw-out portion being rotatably supported at right angles with respect to the inclined tape travelling path, the second loading means corresponding to the second tape draw-out portion being rotatably supported at right angles with respect to the tape travelling path of the magnetic tape drawn out from the second tape draw-out portion; characterised in that said inclining means is immovably disposed in the vicinity of said first tape draw-out portion on an outer side of an M-shaped tape loop formed by the drawing out of the magnetic tape.

By such an arrangement according to the present invention, the winding angle of the magnetic tape onto the single inclining means is greatly reduced thereby reducing the travelling load on the magnetic tape.

An embodiment of the invention will now be described by way of example with reference to the accompanying drawings, in which:
Fig. 1(a) is a schematic top plan view showing a general construction of a magnetic recording and reproducing apparatus according to one preferred embodiment of the present invention;
Fig. 1(b) is a fragmentary perspective view as observed in a direction indicated by an arrow A in Fig. 1(a);
Fig. 1(c) is also a fragmentary perspective view as seen in a direction indicated by an arrow C in Fig. 1(a);
Fig. 2(a) is a schematic top plan view showing a general construction of a conventional magnetic recording and reproducing apparatus (already referred to); and
Fig. 2(b) is a fragmentary perspective view as observed in a direction indicated by an arrow B in Fig. 2(a) (already referred to).

Before the description of the present invention proceeds, it is to be noted that like parts are designated by like reference numerals throughout the accompanying drawings.

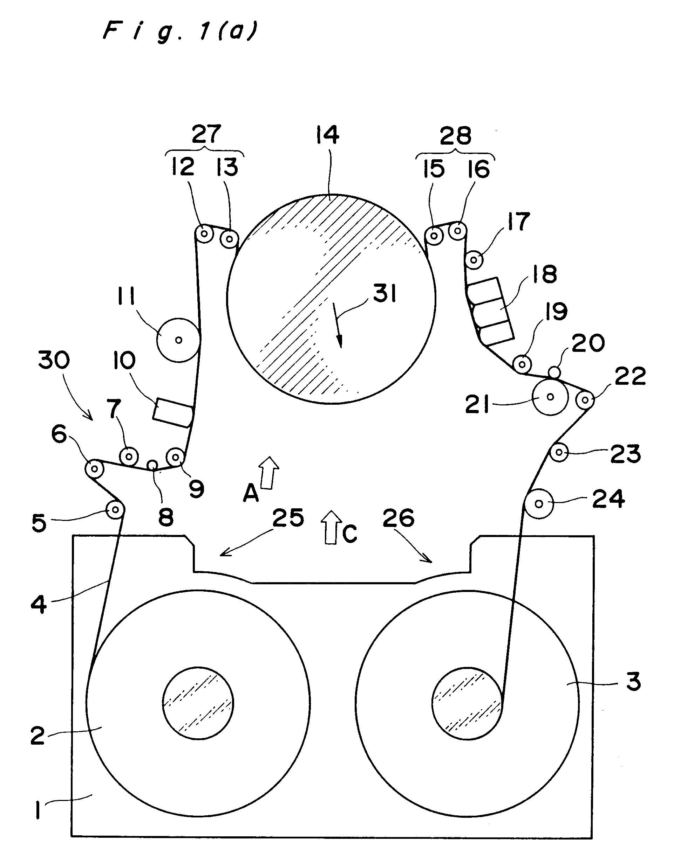

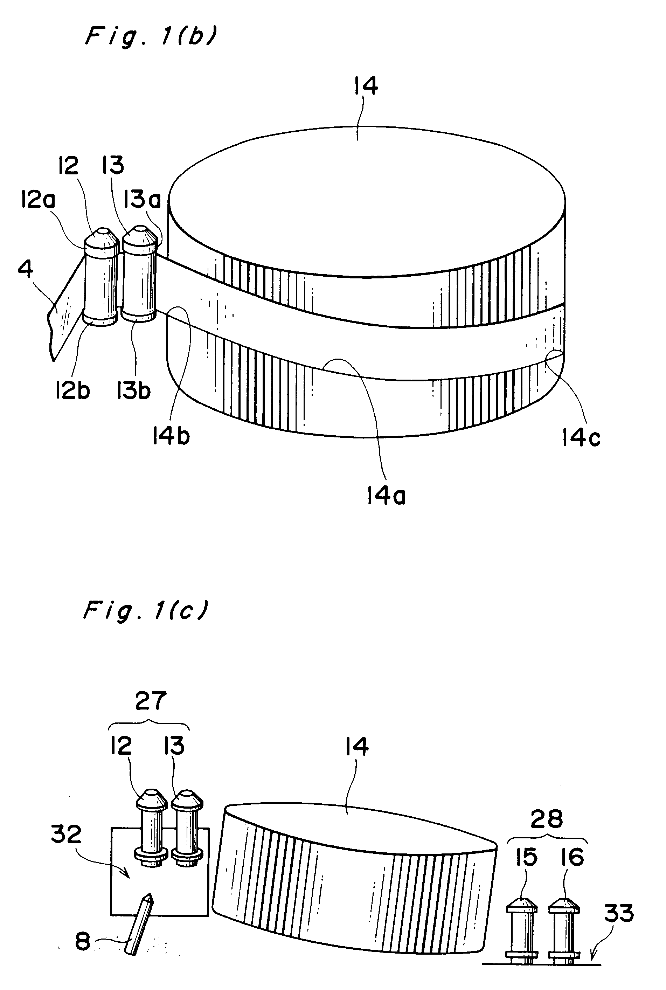

Referring now to the drawings, there is shown in Fig. 1(a) an improved magnetic recording and reproducing apparatus of a helical scan system according to one preferred embodiment of the present invention. The embodiment generally includes a set of loading means 27 and 28 for drawing out a magnetic tape 4 accommodated in a tape cassette 1 and wound around a set of supply and take-up reels 2 and 3 disposed to lie on the same plane, from tape draw-out portions 25 and 26 of the tape cassette 1 so as to be wound along part of the outer peripheral surface of a rotary head cylinder 14 in an approximately M-shape. There is also a single inclining post 8 (inclining means) provided in the vicinity (indicated by an arrow 30) of one of the tape draw-out portions 25 for causing the tape travelling path of the magnetic tape drawn out from said tape storing portion 25 to become inclined with respect to the plane of the reels.

One loading means 27 corresponding to said tape draw-out portion 25 includes rollers 12 and 13 rotatably supported at right angles with respect to the tape travelling path of the magnetic tape 4 which has been inclined by the inclining post 8 shown in Fig. 1(c). Moreover, at upper and lower ends of the rollers 12 and 13, flanges 12a and 12b, and 13a and 13b (Fig. 1(b)) are respectively formed for controlling the travel of the magnetic tape 4.

The magnetic tape 4 is helically wound onto the rotary head cylinder 14 referred to above, having been first inclined by the inclining post 8. The rotary head cylinder 14 is inclined in a direction to correct the inclination of the tape travelling reference path of the magnetic tape 4. More specifically, this rotary head cylinder 14 is inclined by an angle in a direction opposite (direction indicated by an arrow 31, Fig. 1a)) to that in which the magnetic tape 4 leaves said rotary head cylinder 14. A lead portion 14a is spirally formed on the rotary head cylinder 14 (Fig. 1(b)) so that it is the highest at an inlet portion 14b of the rotary head cylinder 14, and becomes the lowest at an outlet portion 14c thereof so as to be at the same height as that of the lowest edge of the magnetic tape 4 within the tape cassette 1.

Meanwhile, the other loading means 28 corresponding to the tape draw-out portion 26 includes rollers 15 and 16 rotatably supported at right angles with respect to the tape travelling path of the magnetic tape 4 drawn out from the tape storing portion 26. Although not particularly shown, at upper and lower ends of the rollers 15 and 16, flanges are respectively formed for controlling the travel of the magnetic tape 4 in the similar manner as in the rollers 12 and 13 for the loading means 27.

The magnetic tape 4 paid out from the supply reel 2 in parallel to the plane in which the supply and take-up reels 2 and 3 lie is twisted by the inclining post 8 such that its tape travelling path is inclined. Thereafter, the magnetic tape 4 is guided by a rotary roller 9, an erasing head 10, another rotary roller 11 and the rollers 12 and 13 of the loading means 27. These parts are directed perpendicularly to the tape travelling path of the inclined magnetic tape 4. The tape is then helically wound around the outer peripheral face of the rotary head cylinder 14.

Subsequently, after leaving the rotary head cylinder 14 the magnetic tape 4 having been corrected for the inclination of the tape travelling path by said rotary head cylinder 14, is delivered towards the tape draw-out portion 26 of the tape cassette 1 by a capstan 20 and a pinch roller 21 through the rollers 15 and 16 of the loading means 28, a rotary roller 17, an audio head 18 and another rotary roller 19, and is further wound onto the take-up reel 3 through rotary rollers 22, 23 and 24.

It should be noted here that, the rollers 5, 6, 7, 15, 16, 17, 19, 22, 23 and 24, the audio head 18, the capstan 20 and the pinch roller 21, are all directed perpendicularly with respect to the plane in which the supply reel 2 and the take-up reel 3 lie.

Accordingly, since the winding angle of the magnetic tape 4 onto the inclining post 8 is greatly reduced, while all the rollers other than said inclining post 8 may be arranged to be rotatable, the travelling load of the magnetic tape 4 can be made very small.

Moreover, owing to the construction that the flanges may be formed respectively on the rollers 13 and 15 located close to the inlet portion 14b and the outlet portion 14c of the rotary head cylinder 14, running control of the magnetic tape 4 can be effected at a high accuracy.

By way of example, in the conventional recording and reproducing apparatus in Figs. 2(a) and 2(b), the winding angle of the magnetic tape 44 onto the first and second inclining posts 49 and 51 is about 140°, whereas the winding angle of the magnetic tape 4 onto the inclining post 8 in the arrangement according to the present invention is approximately 26°.

It should also be noted here that in the foregoing embodiment, although the loading means 27 is constituted by the rollers 12 and 13, and the loading means 28, by the rollers 15 and 16, this may be so modified so as to form each of the loading means 27 and 28 by one roller.

Since the magnetic recording and reproducing apparatus includes a tape inclining means which is immovably disposed in the vicinity of said first tape draw-out portion on a side of said magnetic tape external to an M-shaped loop formed by drawing out said magnetic tape from said cassette tape it is possible to greatly reduce the winding angle of the magnetic tape onto the inclining means, and accordingly, the travelling load of the entire travelling system of the magnetic tape can be decreased.

Furthermore, by the above arrangement, since the loading means positioned in the vicinity of the rotary head cylinder may be arranged rotatable, with flanges being provided on said loading means, the travelling control of the magnetic tape may be effected at high accuracy.

## Claims

1. A magnetic recording and reproducing apparatus of the helical scan system type which comprises a set of first and second loading means (27, 28) for drawing out a magnetic tape (4) accommodated in a tape cassette (1) and wound around a set of reels (2, 3) lying in the same plane, from first and second tape draw-out portions (25, 26) of said tape cassette (1) so as to be wound around part of the outer peripheral surface of a rotary head cylinder (14) in an approximately M-shape, and inclining means (8) for causing the path of the magnetic tape drawn out from said first tape draw-out portion (25) to become inclined with respect to said plane of said reels, the first loading means (27) corresponding to said first tape draw-out portion (25) being rotatably supported at right angles with respect to the inclined tape travelling path, the second loading means (28) corresponding to the second tape draw-out portion (26) being rotatably supported at right angles with respect to the tape travelling path (33) of the magnetic tape (4) drawn out from the second tape draw-out portion (26); characterised in that said inclining means (8) is immovably disposed in the vicinity of said first tape draw-out portion (25) on an outer side of an M-shaped tape loop formed by the drawing out of the magnetic tape (1).

2. An apparatus as claimed in Claim 1, wherein each of said first and second loading means (27, 28) includes two rotatable rollers (12, 13 or 15, 16).

3. An apparatus as claimed in Claim 2, wherein each of said rollers (12, 13 or 15, 16) is formed with flange portions at its upper and lower ends for effecting control of travelling for the magnetic tape.

4. An apparatus as claimed in Claim 1, wherein each of said first and second loading means (27, 28) includes one rotatable roller.

5. An apparatus as claimed in Claim 1, wherein said inclining means (8) is an inclining post.

## Patentansprüche

1. Magnetische Aufzeichnungs- und Wiedergabevorrichtung mit schraubenförmigem Abtastsystem, mit einer Gruppe von ersten und zweiten Zuführeinrichtungen (27,28) zum Herausziehen eines in einer Bandkassette (1) untergebrachten und um eine in der gleichen Ebene liegende Gruppe von Spulen (2,3) gewickelten Magnetbandes (4) aus ersten und zweiten Bandauszugteilen (25,26) der Bandkassette (1), derart, daß das Magnetband (4) im wesentlichen M-förmig um einen Teil der äußeren Umfangsfläche eines Drehkopfzylinders (14) gewickelt wird, und mit einer Schrägstellungseinrichtung (8), die in bezug auf die Ebene der Spulen einen schrägen Verlauf des Weges des aus dem ersten Bandauszugteil (25) herausgezogenen Magnetbandes bewirkt, wobei die dem ersten Bandauszugteil (25) zugeordnete erste Zuführeinrichtung (27) in bezug auf den schrägverlaufenden Bandweg rechtwinklig und drehbar gelagert ist und die dem zweiten Bandauszugteil (26) zugeordnete zweite Zuführeinrichtung (28) in bezug auf den Bandweg (33) des aus dem zweiten Bandauszugteil (26) herausgezogenen Magnetbandes (4) rechtwinklig und drehbar gelagert ist,
**dadurch gekennzeichnet,**
daß die Schrägstellungseinrichtung (8) in der Nähe des ersten Bandauszugteils (25) an einer Außenseite einer durch das Herausziehen des Magnetbandes gebildeten M-förmigen Schleife unbewegbar angeordnet ist.

2. Vorrichtung nach Anspruch 1, bei der jede der ersten und zweiten Zuführeinrichtungen (27,28) zwei Drehrollen (12,13 oder 15,16) aufweist.

3. Vorrichtung nach Anspruch 2, bei der jede der Rollen (12,13 oder 15,16) an ihrem oberen und unteren Ende Flanschteile zur Führung der Bewegung des Magnetbandes aufweist.

4. Vorrichtung nach Anspruch 1, bei der jede der ersten und zweiten Zuführeinrichtungen (27,28) eine Drehrolle aufweist.

5. Vorrichtung nach Anspruch 1, bei der die Schrägstellungseinrichtung (8) ein Schrägstellungsstift ist.

## Revendications

1. Appareil d'enregistrement et de reproduction magnétique du type à système de balayage hélicoïdal, comprenant un ensemble de premiers et seconds moyens de chargement (27, 28) pour tirer une bande magnétique (4), logée dans une cassette de bande (1) et enroulée autour d'un ensemble de bobines (2, 3) disposées dans le même plan, à partir de première et seconde parties de tirage de bande (25, 26) de ladite cassette de bande (1) de façon à ce qu'elle soit enroulée autour d'une partie de la surface périphérique externe d'un cylindre de tête rotative (14) sous la forme approximative de la lettre M, et des moyens d'inclinaison (8) pour amener le trajet de la bande magnétique tirée de ladite première partie de tirage de bande (25) dans une position inclinée par rapport audit plan desdites bobines, les premiers moyens de chargement (27) correspondant à ladite première partie de tirage de bande (25) étant supportés à rotation à angle droit par rapport au trajet de parcours de bande incliné, les seconds moyens de chargement (28) correspondant à la seconde partie de tirage de bande (26) étant supportés à rotation à angle droit par rapport au trajet de parcours de bande (33) de la bande magnétique (4) tirée à partir de la seconde partie de tirage de bande (26); caractérisé en ce que lesdits moyens d'inclinaison (8) sont disposés de façon fixe au voisinage de ladite première partie de tirage de bande (25), du côté externe d'une boucle en M formée par le tirage de la bande magnétique.

2. Appareil selon la revendication 1, dans lequel les premiers et seconds moyens de chargement (27, 28) comportent chacun deux rouleaux rotatifs (12, 13, ou 15, 16).

3. Appareil selon la revendication 2, dans lequel lesdits rouleaux (12, 13 ou 15, 16) comportent chacun des parties formant bride au niveau de leurs extrémités supérieures et inférieures afin de commander le déplacement de la bande magnétique.

4. Appareil selon la revendication 1, dans lequel les premiers et seconds moyens de chargement (27, 28) comportent chacun un rouleau rotatif.

5. Appareil selon la revendication 1, dans lequel lesdits moyens d'inclinaison (8) sont constitués par un montant incliné.
